# EUROPEAN PATENT SPECIFICATION

(11) **EP 0 537 893 B1**
(45) Date of publication and mention of the grant of the patent: **20.07.1994**
(21) Application number: 92307933.9
(22) Date of filing: 01.09.1992
(51) Int. Cl.: G06F 12/02, G06F 3/06

(54) **File storage apparatus**
Datenspeichereinrichtung
Dispositif de mémoire de fichiers

(30) Priority: 15.10.1991 GB 9121855
(43) Date of publication of application: 21.04.1993
(73) Proprietor: INTERNATIONAL COMPUTERS LIMITED, Putney, London, SW15 1SW (GB)
(72) Inventor: Herbert, Richard, Stoke-On-Trent, Staffs ST8 6JA (GB)
(74) Representative: Guyatt, Derek Charles

(56) References cited:
- IBM TECHNICAL DISCLOSURE BULLETIN. vol. 15, no. 6, November 1972, NEW YORK US pages 1936 - 1938 CHESAREK 'Space management method'
- IBM TECHNICAL DISCLOSURE BULLETIN. vol. 18, no. 7, December 1975, NEW YORK US pages 2124 - 2130 DUKE 'Set management technique'

## Description

### Background to the Invention

This invention relates to data file storage apparatus.

The invention is particularly, although not exclusively, concerned with a data file store for use as a work-in-progress store in a transaction processing system.

In a transaction processing system, the operation of the system is divided into units, referred to as transactions. Each transaction is atomic, in the sense that, at the end of the transaction, either all the data updates associated with the transaction must be applied to their respective databases, or none, depending on whether the transaction is deemed to have been successfully completed. That is, it is not permissible to apply only some of the updates.

To ensure atomicity of transactions, it has been proposed to use a special store, referred to as the work-in progress (WIP) store, to keep a log of data updates that have been initiated by the transactions, but which have not yet been confirmed as committed. (See our co-pending not prepublished European patent application EP-A-525946). Such a store has the property that, in normal use, the only operations on the store are to write data or to delete data: reading of the store is required only in the event of a failure, requiring recovery of any transactions that have not yet committed their data updates.

Two different methods have been proposed for organising such a store: random access and serial file.

In the random access technique, each session is allocated an area of file store, for holding the required log of data updates. When the data recorded in the session is no longer required, or is updated, the old data is invalidated, by overwriting it either with the new data or with a free pattern.

This technique is potentially the most compact in terms of file store usage. However, the major disadvantages of this technique are:
(i) unless the application is well behaved, the area allocated to each transaction would either have to be large enough to hold the largest possible amount of data which can be expected, or else an overflow area has to be provided, leading to internal fragmentation or variations in performance.
(ii) such a technique may not be well suited to systems where the number of sessions is highly variable and sessions are short lived, since each session requires a fixed space allocated to it whether or not it is in use.

In the serial file technique the file store is viewed as an infinite serial file, and data is written only to the end of this file. When an item of data has to be invalidated, a special control area, referred to as a "forget block", is written to the file, indicating that the previous data item is invalid.

The main advantage of this technique is that the amount of data written for a transaction is not fixed by a predetermined size. Also, since data is written only to one point in the file (the current end pointer), several items of unrelated data can be written in one request, thus reducing head movement (in the case of a disc store).

The principal disadvantage of the serial file technique is that there is, of course, no such thing as an infinite serial file. Any practical implementation therefore requires a garbage collector to go through the file, freeing space and re-allocating areas to allow the next pass through the file to proceed. This is an expensive process in terms of processing time, and may lead to the garbage collection process becoming a bottleneck.

A prior art data file storage apparatus is also known from: IBM TECHNICAL DISCLOSURE BULLETIN vol. 18, no. 7, December 1975, NEW YORK US, pages 2124-2130 DUKE 'Set management technique'

The object of the present invention is to provide a new technique for organising a data file store which builds on the advantages of the serial file organisation, while avoiding the worst aspects of its performance (ie. mandatory garbage collection).

### Summary of the Invention

According to the invention, there is provided a data file store system comprising a file store (24) holding a plurality of blocks, each of which can be designated as a free block or a data block, the free blocks being arranged in a chain, wherein a data area is created by allocating at least one of the free blocks to the area and writing data into the area, and wherein a data area is discarded by freeing all the data blocks in the data area and returning those blocks to the chain of free blocks, characterised by:
a) means (31) for allocating one of said free blocks to create a forget block pointing to a data area to be discarded, and
b) means (43,44) operative whenever at least one of the blocks in a data area pointed to by a forget block is reused, for freeing that forget block and returning the freed block to the chain of free blocks.

There is also provided a method according to claim 5.

Preferably, the free blocks are chained together by means of a memory-resident table.

### Brief Description of the Drawings

Figure 1 is a schematic block diagram of a data processing system including a data file store in accordance with the invention.

Figure 2 is a sequence diagram illustrating the operation of the system.

Figures 3 and 4 are flow charts showing the operation of the file store manager.

Figures 5-7 show an example of the operation of the file store.

### Description of an Embodiment of the Invention

One data processing system including a data file store in accordance with the invention will now be described by way of example with reference to the accompanying drawings.

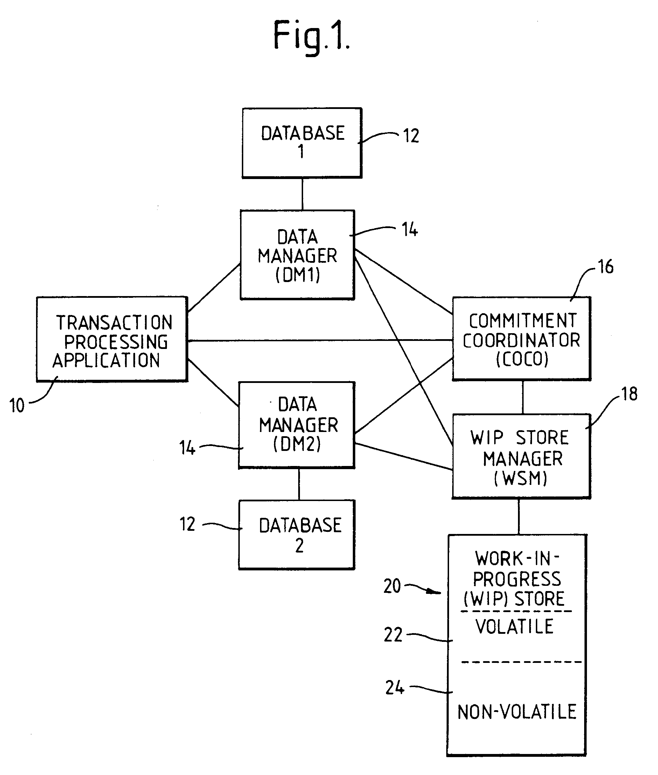

Referring to Figure 1, the system includes a number of application programs 10 which run in a transaction processing environment. (In this example, only one application program is shown, but in general there may be many such programs in the system).

The application program 10 can access two databases 12 (DATABASE 1 and DATABASE 2). Each of these databases has its own data manager 14 (DM1 and DM2).

The applications and the data managers all communicate with a coordination controller (COCO) 16. The data managers also communicate with a work-in-progress store manager (WSM) 18, which controls a work-in-progress (WIP) store 20.

In this embodiment the data managers, coordination controller and work-in-progress store manager are all software components which run on the same host processor as the application programs. For example, the host processor may be an ICL Series 39 system running under the VME operating system.

Communication between these components is achieved by a messaging service. Details of this messaging service form no part of the present invention and so will not be described herein.

The WIP store comprises two portions: a volatile store 22, which consists of an area of the main RAM of the system, and a non-volatile store 24, which consists of an area of disc store.

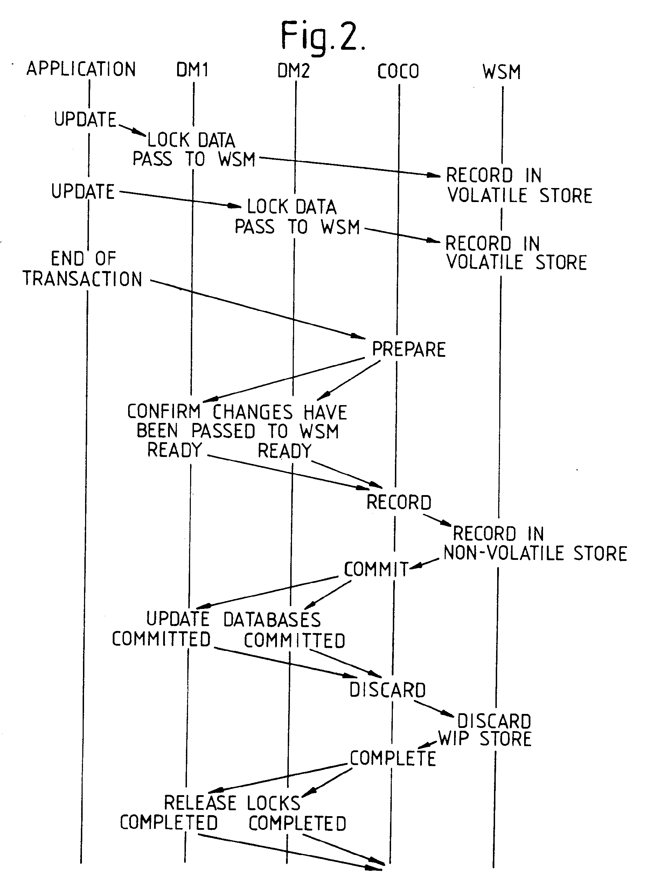

Referring now to Figure 2, this shows a typical sequence of operations of the above components.

In this example, it is assumed that the application program performs a transaction, in which it updates both the databases in turn. The data updates associated with a transaction are atomic, in that, at the end of the transaction either all the updates associated with the transaction must be applied to the respective databases, or none, depending on whether or not the transaction is deemed to have been successfully completed.

As shown in Figure 2, whenever the application generates a database update, it sends a message to the appropriate data manager. The data manager then sets locks on the data in the database, so as to prevent any other transaction from updating the data while the present transaction is in progress, and passes details of the update to the work-in-progress store manager. The WSM then writes details of the changes to be made to the data into the volatile area of the WIP store.

When the user work for the transaction is complete, the application sends a message to the COCO. The COCO then sends a PREPARE message to each of the data managers involved in the transaction.

In response to this PREPARE message, each data manager confirms that all the changes in the data have been passed to the WSM, and returns a READY message to the COCO.

When the COCO has received READY messages from each of the data managers, it sends a RECORD message to the WSM, instructing it to record all the changes to the data (currently held in volatile store) into the non-volatile portion of the WIP store. When the WSM has done this, the COCO sends a COMMIT message to each of the data managers involved in the transaction.

In response to this COMMIT message, each data manager applies the updates to its database. No logging action is required. When it has done this, each data manager returns a COMMITTED message to the COCO.

When the COCO has received a COMMITTED message from each of the data managers, it sends a DISCARD message to the WSM, instructing it to discard the changes logged in the non-volatile portion of the WIP store in respect of this transaction. (These are no longer required since the databases have now been updated). When the WSM has done this, the COCO sends a COMPLETE message to each of the data managers involved in the transaction.

When the data managers receive the COMPLETE message, they release any locks applied to their respective databases, and return a COMPLETED message to the COCO, informing it that the transaction is now complete.

The non-volatile portion 24 of the WIP store comprises a large (greater than 1 Mbyte) area of disc file store, consisting of a number of blocks of predetermined size (e.g. 2 Kbyte). Each block has an absolute address which indicates its physical position on the disc.

Each block is designated as one of three types: data, forget and free.

Data blocks contain the transaction logging data that is to be stored in the WIP store. The data blocks are grouped into data areas, each area containing at least one block. At least the first and last data blocks of each area contain pointers, pointing to the absolute address of the other end of the area. Whenever a data area is allocated, it is given a unique name to distinguish it from any other data areas on the disc.

A forget block contains pointers to a data area, the contents of which are no longer required and hence can be discarded. These pointers include the absolute address of the first data block in the area, and the unique name of the area.

A block is set to the free state if:
(i) it has not been written
(ii) it is part of a data area which is pointed to by a forget block or,
(iii) it is a forget block whose data area has been partially or completely reused.

The WIP store manager maintains a main-store table which contains an entry for each block in the file store. Each entry holds an indicator for the type of block (data, forget or free), and two pointers. If the block is free, the first pointer points to the next free block in a free chain, and the second pointer points to the absolute address of the forget block (if any) that has freed this block. If the block is a forget block, the first pointer contains the absolute address of the first data block in the data area which has been freed.

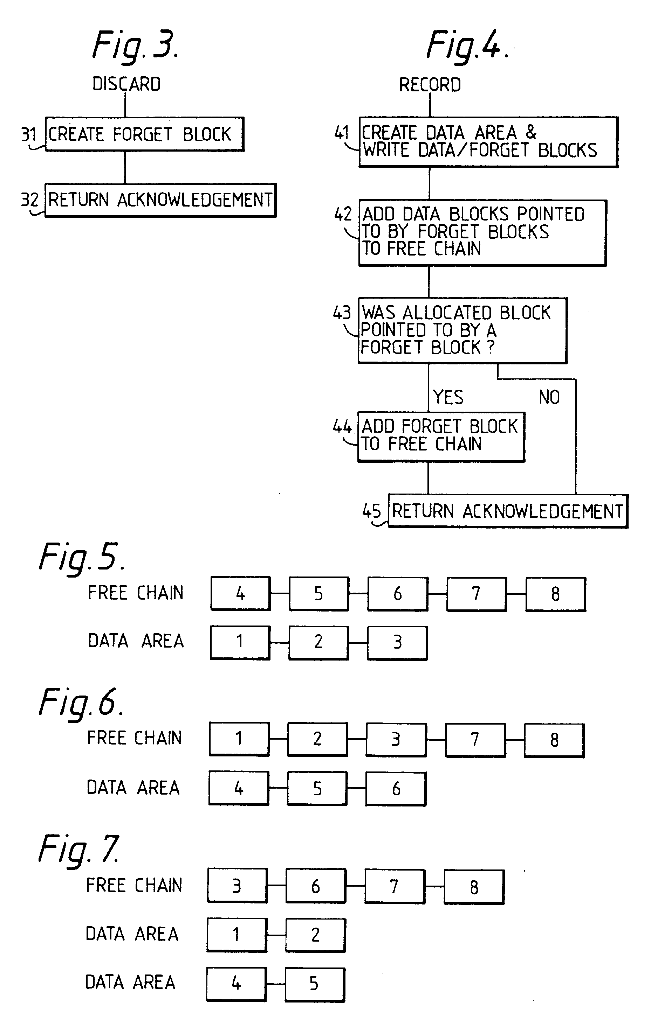

Referring now to Figure 3, this shows the action of the WIP store manager in response to a DISCARD message from the COCO. The WIP store manager creates a forget block (31), pointing to the data area which is to be discarded. However, it does not write the block immediately to the WIP store, but waits until the next RECORD message, so as to avoid the need for an extra disc access. The WSM then returns an acknowledgement message (32) to the COCO.

Referring to Figure 4, this shows the action of the WIP store manager in response to a RECORD message from the COCO. The WSM creates a new data area (41), by allocating one or more sequential blocks from the head of the free chain, and writes the transaction logging data and any unwritten forget blocks into this area. Any data blocks in the data areas pointed to by these forget blocks are freed and added to the free chain (42). Freed blocks may either be added to the end of the free chain, or inserted into an ordered free chain. Adding to the end of the chain is more efficient, but is more prone to fragmentation than maintaining an ordered chain.

The WSM then checks whether any of these allocated blocks were in a data area pointed to by a forget block (43). If so, that forget block is freed and added to the free chain (44).

Finally, the WSM returns an acknowledgement message (45) to the COCO.

Preferably, the system preserves inter-session data, including the WIP store contents table, so that, following a system crash, this inter-session data can be used to access the WIP store and retrieve the transaction logging data for performing the necessary recovery process. However, if this inter-session data is lost, it will be necessary to search the WIP store, reading every record, so as to reconstruct the WIP contents table.

### Example of Operation

An example of the way in which the WSM manages the WIP store will now be described.

Referring to Figure 5, it is assumed that initially a data area has been created, containing blocks 1-3. The other blocks are all in the free chain.

Referring to Figure 6, a new data area is now created, consisting of blocks 4, 5 and 6 from the free chain. In this example, block 6 is a forget block which points to the data area starting at block 1, and so blocks 1-3 are freed and added to the free chain.

Referring to Figure 7, another new data area is now created, consisting of blocks 1 and 2 from the free chain. Because part of the data area pointed to by forget block 6 has now been reused, block 6 is freed and added to the free chain.

## Claims

1. A data file store system comprising a file store (24) holding a plurality of blocks, each of which can be designated as a free block or a data block, the free blocks being arranged in a chain, wherein a data area is created by allocating at least one of the free blocks to the area and writing data into the area, and wherein a data area is discarded by freeing all the data blocks in the data area and returning those blocks to the chain of free blocks, characterised by:
a) means (31) for allocating one of said free blocks to create a forget block pointing to a data area to be discarded, and
b) means (43,44) operative whenever at least one of the blocks in a data area pointed to by a forget block is reused, for freeing that forget block and returning the freed block to the chain of free blocks.

2. A data file store system according to Claim 1 wherein, when a forget block is created, writing of that block to the file store is deferred until a new data area is subsequently created.

3. A data file store system according to Claim 1 or 2 including a memory-resident table having an entry for each block, each entry for a free block containing a pointer to any forget block that relates to that free block.

4. A data file store system according to Claim 3 wherein each entry in said table for a free block also contains a pointer to the next free block in said chain of free blocks.

5. A method of operating a data file store system comprising designating blocks in the file store as free blocks and data blocks, arranging the free blocks in a chain, creating a data area by allocating at least one of the free blocks to the area and writing data into the area, and discarding a data area by freeing all the data blocks in that data area and adding those blocks to the chain of free blocks, characterised by the steps:
a) allocating one of the free blocks to create a forget block pointing to a data area to be discarded, and
b) whenever at least one of the blocks in a data area pointed to by a forget block is reused, freeing that forget block and returning the freed block to the chain of free blocks.

## Patentansprüche

1. Datenspeichereinrichtung mit einem Datenspeicher (24), der eine Vielzahl von Blöcken speichert, von denen jeder als ein freier Block oder ein Datenblock bezeichnet werden kann, wobei die freien Blöcke in einer Kette angeordnet sind, in der ein Datenbereich dadurch geschaffen wird, daß mindestens einer der freien Blöcke dem Bereich zugeordnet wird und Daten in den Bereich eingeschrieben werden, und bei der ein Datenbereich dadurch gelöscht wird, daß alle Datenblöcke im Datenbereich freigegeben werden und diese Blöcke in die Kette von freien Blöcken zurückgeführt werden,
**gekennzeichnet durch**
a) eine Vorrichtung (31), die einen der freien Blöcke so zuordnet, daß ein Vergeß-Block geschaffen wird, der auf einen zu löschenden Datenbereich hinweist, und
b) eine Vorrichtung (43, 44), die dann wirksam wird, wenn mindestens einer der Blöcke in einem Datenbereich, auf den durch einen Vergeß-Block hingewiesen wird, erneut benutzt wird, um diesen Vergeß-Block freizugeben und den freigegebenen Block in die Kette der freien Blöcke zurückzuführen.

2. Datenspeichereinrichtung nach Anspruch 1, bei der dann, wenn ein Vergeß-Block geschaffen wird, das Einschreiben dieses Blockes in den Datenspeicher verzögert wird, bis ein neuer Datenbereich im Anschluß daran geschaffen wird.

3. Datenspeichereinrichtung nach Anspruch 1 oder 2, mit einer speicherresidenten Tabelle, die für einen jeden Block einen Eingang besitzt, der für einen freien Block einen Hinweis auf einen beliebigen Vergeß-Block enthält, welcher auf den freien Block bezogen ist.

4. Datenspeichereinrichtung nach Anspruch 3, bei dem jeder Eintrag in die Tabelle für einen freien Block auch einen Hinweis auf den nächsten freien Block in der Kette von freien Blöcken enthält.

5. Verfahren zum Betreiben einer Datenspeichereinrichtung, bei dem Blöcke im Datenspeicher als freie Blöcke und Datenblöcke bezeichnet werden, die freien Blöcke in einer Kette angeordnet werden, ein Datenbereich durch Zuordnen wenigstens eines der freien Blöcke zu dem Bereich geschaffen wird und Daten in den Bereich eingeschrieben werden, und ein Datenbereich dadurch gelöscht wird, daß alle Datenblöcke in diesem Datenbereich freigegeben werden und diese Blöcke der Kette von freien Blöcken hinzuaddiert werden,
dadurch gekennzeichnet, daß
a) einer der freien Blöcke so zugeordnet wird, daß ein Vergeß-Block geschaffen wird, der auf einen zu löschenden Datenbereich hinweist, und
b) wenn mindestens einer der Blöcke in einem Datenbereich, der auf einen Vergeß-Block hinweist, erneut benutzt wird, dieser Vergeß-Block freigegeben und der freigegebene Block auf die Kette der freien Blöcke zurückgeführt wird.

## Revendications

1. Système de mémoire de fichier de données comprenant une mémoire de fichier (24) maintenant une pluralité de blocs dont chacun peut être indiqué en tant que bloc libre ou bloc de données, les blocs libres étant disposés dans une chaîne, dans lequel une zone de données est créée par l'attribution au moins d'un des blocs libres à la zone et l'écriture de données dans la zone, et dans lequel une zone de données est rejetée en libérant tous les blocs de données dans la zone de données et en remettant ces blocs dans la chaîne des blocs libres, caractérisé par :
a) un moyen (31) pour attribuer un desdits blocs libres afin de créer un bloc à oublier indiquant une zone de données à rejeter, et,
b) un moyen (43, 44) actif chaque fois qu'au moins un des blocs dans une zone de données indiquée par un bloc à oublier est réutilisé, pour libérer ce bloc à oublier et remettre le bloc libéré dans la chaîne des blocs libres.

2. Système de mémoire de fichier de données selon la revendication 1, dans lequel, quand un bloc à oublier est créé, l'écriture de ce bloc dans la mémoire de fichier est différée jusqu'à ce qu'une nouvelle zone de données soit ensuite créée.

3. Système de mémoire de fichier de données selon l'une quelconque des revendications 1 et 2, incluant une table se trouvant en mémoire comportant une information d'entrée pour chaque bloc, chaque information d'entrée pour un bloc libre contenant un pointeur de tout bloc à oublier qui se rapporte à ce bloc libre.

4. Système de mémoire de fichier de données selon la revendication 3, dans lequel chaque information d'entrée dans ladite table pour un bloc libre contient également un pointeur du bloc libre suivant dans ladite chaîne des blocs libres.

5. Procédé de fonctionnement d'un système de mémoire de fichier de données consistant à indiquer des blocs dans la mémoire de fichier en tant que blocs libres et blocs de données, à disposer les blocs libres dans une chaîne, à créer une zone de données en attribuant au moins un des blocs libres à la zone et en écrivant des données dans la zone, et à rejeter une zone de données en libérant tous les blocs de données dans cette zone de données et en ajoutant ces blocs à la chaîne des blocs libres, caractérisé par les étapes qui consistent à :
a) attribuer un des blocs libres pour créer un bloc à oublier indiquant une zone de données à rejeter, et,
b) chaque fois qu'au moins un des blocs dans une zone de données indiquée par un bloc à oublier est réutilisé, à libérer ce bloc à oublier et remettre le bloc libéré dans la chaîne des blocs libres.
